# EUROPÄISCHE PATENTSCHRIFT

(11) **EP 3 025 570 B1**
(45) Veröffentlichungstag und Bekanntmachung des Hinweises auf die Patenterteilung: **20.03.2019**
(21) Anmeldenummer: 15401118.3
(22) Anmeldetag: 11.11.2015
(51) Int. Cl.: A01B 59/042, A01B 63/14, B60D 1/32

(54) **GEZOGENE LANDWIRTSCHAFTLICHE MASCHINE**
PULLED AGRICULTURAL MACHINE
ENGIN AGRICOLE TRACTÉ

(30) Priorität: 28.11.2014 DE 102014117486
(43) Veröffentlichungstag der Anmeldung: 01.06.2016
(73) Patentinhaber: Amazonen-Werke H. Dreyer GmbH & Co. KG, 49205 Hasbergen (DE)
(72) Erfinder: SCHWOPE, Reinhard, 06258 Schkopau / OT Wallendorf (DE); ANDRICH, Robert, 04177 Leipzig (DE)

(56) Entgegenhaltungen:
- EP-A2- 1 905 290
- DE-A1-102012 102 873
- GB-A- 2 329 368

## Beschreibung

Die Erfindung betrifft eine gezogene landwirtschaftliche Maschine gemäß des Oberbegriffs des Patentanspruches 1.

Eine derartige gezogene landwirtschaftliche Maschine ist in der DE 101 42 533 A1 beschrieben. Die hier beschriebene Maschine ist als gezogene Verteilmaschine, insbesondere Feldspritze ausgebildet. Auf der Vorderseite des Rahmens der Maschine ist mittels eines Gelenkes, dessen Gelenkachse quer zur Fahrtrichtung verläuft, eine Zugdeichsel in aufrechter Ebene bewegbar angeordnet. Zwischen der Zugdeichsel und dem Rahmen ist ein doppeltwirkender Hydraulikzylinder zur Höhenverstellung der Zugdeichsel angeordnet. Diesem Hydraulikzylinder sind Feder- und Dämpfungselemente in Form von beispielsweise einer Stickstoffblase zugeordnet. Die Aufgabe und Funktion dieser Feder- und Dämpfungselemente ist hier nicht beschrieben.

Der Erfindung liegt die Aufgabe zu Grunde, eine einfach aufgebaute und sicher funktionierende Feder- und Dämpfungseinrichtung für ein ruhiges Verhalten der Maschine zu schaffen.

Diese Aufgabe der erfindungsgemäß dadurch gelöst, dass jeder Zylinderkammer des Hydraulikzylinders zumindest ein als Druckspeicher ausgebildetes Dämpfungselement zugeordnet ist.

Infolge dieser Maßnahme wird die Zugdeichsel gegenüber dem Rahmen in beiden Richtungen abgefedert und gedämpft. Hierdurch ergibt sich ein wesentlich verbessertes Federungs- und Dämpfungsverhalten der gezogenen Maschine gegenüber dem die Maschine ziehenden Ackerschlepper.

Ein besonders gutes Federungs- und Dämpfungsverhalten, welches an die jeweilige Einsatzsituation und Einsatzbedingungen angepasst ist und/oder angepasst werden kann, lässt sich dadurch erreichen, dass jeder Zylinderkammer des Hydraulikzylinders ein Druckbegrenzungsventil zugeordnet ist.

In einfacher Weise lässt sich eine Federungs- und Dämpfungsschaltung für den zwischen der Deichsel und dem Rahmen angeordneten Hydraulikzylinder dadurch realisieren, dass jede Zylinderkammer des Hydraulikzylinders mit einer Hydraulikleitung an eine Hydraulikanlage angeschlossen ist, dass in der zu dem Hydraulikzylinder führenden Leitung in Parallelschaltung ein Druckbegrenzungsventil, ein Absperrventil, und ein die Hydraulikleitung aus Richtung des Hydraulikzylinders absperrendes Rückschlagventil angeordnet ist.

Die gezogene landwirtschaftliche Maschine kann als Bodenbearbeitungsmaschine, Verteilmaschine, wie Feldspritzen oder Sämaschinen, etc. ausgebildet sein.

Weitere Einzelheiten der Erfindung sind der Beispielsbeschreibung und den Zeichnungen zu entnehmen. Die Zeichnungen zeigen
- Fig.1: die an einen Ackerschlepper angekoppelte gezogene Maschine mit einem Hydraulikschaltplan für die Federung und Dämpfung durch den zwischen Deichsel und Rahmen angeordneten Hydraulikzylinders in Prinzipdarstellung und
- Fig.2: einen weiteren Hydraulikschaltplan.

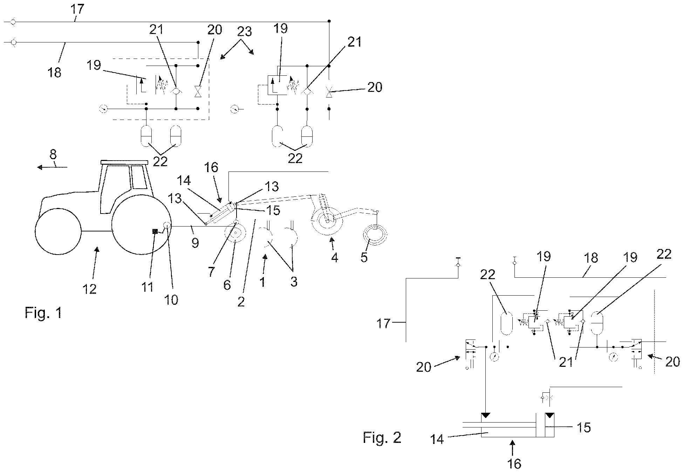

Die gezogene landwirtschaftliche Maschine 1 gemäß des Ausführungsbeispiels nach Fig.1 ist als Bodenbearbeitungsmaschinen ausgebildet. Die Maschine 1 weist den Rahmen 2 mit den daran angeordneten Bodenbearbeitungswerkzeugen 3 auf. Auf der Rückseite des Rahmens 2 ist ein Fahrwerk 4 und eine Bodenwalze 5 angeordnet. An der Vorderseite des Rahmens 2 befinden sich Laufräder 6. An der Vorderseite des Rahmens 2 ist mittels eines Gelenkes 7, dessen Gelenkachse quer zur Fahrtrichtung 8 verläuft, die Zugdeichsel 9 in Höhenrichtung bewegbar angeordnet. Das vordere Ende der Zugdeichsel weißt eine Zugkupplung 10 auf, welche mit der Zugvorrichtung 11 des Ackerschleppers 12 in bekannter Weise zu kuppeln ist.

Zwischen dem Rahmen 2 und der Zugdeichsel 9 ist mittels Gelenken 13 der doppeltwirkende und Zylinderkammern 14 und 15 aufweisende Hydraulikzylinder 16 angeordnet.

Jeder Zylinderkammer 14,15 des Hydraulikzylinders 16 ist über eine Hydraulikleitung an eine Hydraulikanlage, die beispielsweise die Hydraulikanlage des die Maschine ziehenden Ackerschlepper 12 ist, angeschlossen. In jeder der von der Hydraulikanlage zu einer Zylinderkammer 14,15 des Hydraulikzylinders 16 führenden Leitung 17,18 ist in Parallelschaltung ein Druckbegrenzungsventil 19, ein Absperrventil 20, und ein die jeweilige Hydraulikleitung 17,18 aus Richtung des Hydraulikzylinders 16 absperrendes Rückschlagventil 21 angeordnet. Das Druckbegrenzungsventil 19 kann einstellbar ausgestaltet sein, um sich an die jeweiligen Einsatzbedingungen anpassen zu können, umso ein optimales Federungs- und Dämpfungsverhalten des Hydraulikzylinders 16 zu erreichen. Weiterhin ist jeder Zylinderkammer 14,15 des Hydraulikzylinders 16 zumindest ein Druckspeicher 22, der an in die jeweilige Leitung 17,18 entsprechend angeschlossen ist, zugeordnet. Je nach Größe und Federungs- und Dämpfungsvolumen des jeweiligen Druckspeichers 17,18 in Verbindung mit der erforderlichen Federungs- und Dämpfungswirkung, kann ein entsprechend dimensionierter Druckspeicher oder mehrere Druckspeicher 22 vorgesehen sein. Des Weiteren ist in der Hauptleitung 17,18 zwischen jeder Zylinderkammer 14,15 und der zugeordneten, zu der Hydraulikanlage führenden Leitung 17,18, ein Absperrventil 20 angeordnet.

Im Normalfall ist Hydraulikschaltung so gestaltet, dass der Deichselzylinder 16 in Schwimmstellung arbeitet. Durch das Druckbegrenzungsventil 19 und den als Membranspeicher ausgebildeten Druckspeicher 22 arbeitet der Hydraulikzylinder 16 wie eine beidseitig eingespannte Feder. Durch das Druckbegrenzungsventil 19 ist das Federungs- und Dämpfungsverhalten des Hydraulikzylinders 16 einzustellen. Über das Absperrventil 20 ist das gesamte Federung- und Dämpfungsmodul 23 abzuschalten. Mittels des entsprechend vorbeschriebenen Hydraulikzylinders 16 mit der zugeordneten Hydraulikschaltung 23 lässt sich insbesondere bei der Arbeit auf die vertikalen Schwingungen und Bewegungen der gezogenen Maschine 1 in gewünschter Weise Einfluss nehmen, damit ein ruhiges Verhalten der Maschine 1 erreicht wird.

Der Hydraulikschaltplan gemäß Fig.2 ist vom Grundsatz her genauso aufgebaut wie der Hydraulikschaltplan gemäß Fig.1. Anstelle einer aufgelösten Bauweise der Hydraulikkomponenten 19, 20, 21, 22 ist hier eine kompakt aufgebaute Hydraulikschalteinrichtung 24 verwirklicht. Auch diese Hydraulikschaltung 24 weist Druckspeicher 22, einstellbare Druckbegrenzungsventile 19, Rückschlagventile 21 Absperrventile 22 auf.

## Patentansprüche

1. Gezogene landwirtschaftliche Maschine (1) mit einem Rahmen (2), einem Fahrwerk (4) und einer Zugdeichsel (9), wobei die Zugdeichsel (9) mittels zumindest einem Gelenk (7) gelenkig und gegenüber dem Rahmen (2) in aufrechter Richtung wegbar angeordnet ist, wobei zwischen dem Rahmen (2) und der Zugdeichsel (9) ein Zylinderkammern (14) aufweisender Hydraulikzylinder (16), der vorzugsweise doppeltwirkend ausgebildet ist, mit zugeordneten Dämpfungselementen angeordnet ist, **dadurch gekennzeichnet, dass** jeder Zylinderkammer (14,15) des Hydraulikzylinders (16) zumindest ein als Druckspeicher (22) ausgebildetes Dämpfungselement zugeordnet ist.

2. Maschine nach Anspruch 1, **dadurch gekennzeichnet, dass** jeder Zylinderkammer (14,15) des Hydraulikzylinders (16) ein Druckbegrenzungsventil (19) zugeordnet ist.

3. Maschine nach zumindest einem der vorstehenden Ansprüche, **dadurch gekennzeichnet, dass** jede Zylinderkammer (14,15) des Hydraulikzylinders (16) mit einer Hydraulikleitung (17,18) an eine Hydraulikanlage angeschlossen ist, dass in der zu dem Hydraulikzylinder (16) führenden Leitung (17,18) in Parallelschaltung ein Druckbegrenzungsventil (19), ein Absperrventil (20), und ein die Hydraulikleitung (17,18) aus Richtung des Hydraulikzylinders (16) absperrendes Rückschlagventil (21) angeordnet ist.

## Claims

1. Pulled agricultural machine (1) having a frame (2), a chassis (4) and a drawbar (9), the drawbar (9) being arranged by means of at least one joint (7) in an articulated manner and such that it can be moved in an upright direction with respect to the frame (2), a hydraulic cylinder (16) which has cylinder chambers (14) and is preferably of double-acting configuration being arranged with associated damping elements between the frame (2) and the drawbar (9), **characterized in that** each cylinder chamber (14, 15) of the hydraulic cylinder (16) is assigned at least one damping element which is configured as a pressure accumulator (22).

2. Machine according to Claim 1, **characterized in that** each cylinder chamber (14, 15) of the hydraulic cylinder (16) is assigned a pressure relief valve (19).

3. Machine according to at least one of the preceding claims, **characterized in that** each cylinder chamber (14, 15) of the hydraulic cylinder (16) is connected by way of a hydraulic line (17, 18) to a hydraulic system, and **in that** a pressure relief valve (19), a shut-off valve (20) and a check valve (21) which shuts off the hydraulic line (17, 18) from the direction of the hydraulic cylinder (16) are arranged in a parallel circuit in the line (17, 18) which leads to the hydraulic cylinder (16).

## Revendications

1. Engin agricole tracté (1) comprenant un châssis (2), un train de roulement (4) et un timon (9), le timon (9) étant disposé de manière articulée au moyen d'au moins une articulation (7) et de manière à pouvoir être tourné dans une direction verticale par rapport au châssis (2), un cylindre hydraulique (16) présentant des chambres de cylindre (14) étant disposé entre le châssis (2) et le timon (9), lequel cylindre hydraulique est réalisé de préférence avec double action, avec des éléments d'amortissement associés, **caractérisé en ce qu'**au moins un élément d'amortissement réalisé sous forme d'accumulateur de pression (22) est associé à chaque chambre de cylindre (14, 15) du cylindre hydraulique (16).

2. Engin selon la revendication 1, **caractérisé en ce qu'**une soupape de limitation de la pression (19) est associée à chaque chambre de cylindre (14, 15) du cylindre hydraulique (16).

3. Engin selon au moins l'une quelconque des revendications précédentes, **caractérisé en ce que** chaque chambre de cylindre (14, 15) du cylindre hydraulique (16) est raccordée par une conduite hydraulique (17, 18) à une installation hydraulique, et **en ce qu'**une soupape de limitation de la pression (19), une soupape d'arrêt (20) et un clapet antiretour (21) bloquant la conduite hydraulique (17, 18) depuis la direction du cylindre hydraulique (16) sont disposés et montés en parallèle dans la conduite (17, 18) conduisant au cylindre hydraulique (16).
